**Europäisches Patentamt**

**European Patent Office**

**Office européen des brevets**

(19)

(11) Veröffentlichungsnummer: **0 212 543 B1**

(12) **EUROPÄISCHE PATENTSCHRIFT**

(45) Veröffentlichungstag der Patentschrift: **21.08.91**

(51) Int. Cl.⁵: **C01F 11/00**, C05G 1/00

(21) Anmeldenummer: **86111129.2**

(22) Anmeldetag: **12.08.86**

(54) **Verfahren zur Herstellung von ammoniumsyngenithaltigen Produkten.**

(30) Priorität: **21.08.85 DE 3529867**

(43) Veröffentlichungstag der Anmeldung:
**04.03.87 Patentblatt 87/10**

(45) Bekanntmachung des Hinweises auf die
Patenterteilung:
**21.08.91 Patentblatt 91/34**

(84) Benannte Vertragsstaaten:
**AT BE DE FR GB IT NL**

(56) Entgegenhaltungen:
**EP-A- 0 203 464**
**DE-A- 2 603 917**
**US-A- 3 820 970**

(73) Patentinhaber: **BASF Aktiengesellschaft**
**Carl-Bosch-Strasse 38**
**W-6700 Ludwigshafen(DE)**

(72) Erfinder: **Leutner, Bernd, Dr.**
**Taunusstrasse 17**
**W-6710 Frankenthal(DE)**
Erfinder: **Jung, Johann, Prof. Dr.**
**Hardenburgstrasse 19**
**6703 Limburgerhof(DE)**
Erfinder: **Von Maessenhausen, Walter**
**Neuwiesenstrasse 2**
**W-6700 Ludwigshafen(DE)**

**Beschreibung**

Vorliegende Erfindung betrifft ein Verfahren zur Herstellung von ammoniumsyngenithaltigen Produkten, welches ein Doppelsalz der Zusammensetzung $(NH_4)_2SO_4 \bullet CaSO_4 \bullet H_2O$ darstellt, durch Umsetzung von Ammoniumsulfat und kristallwasserfreien oder kristallwasserhaltigen Calciumsulfaten und Überführung in körnige Produkte durch Verpressen. Das körnige Produkt kann vorteilhaft als langsamwirkender Stickstoffdünger eingesetzt werden.

Wie aus "Gmelins Handbuch der Anorganischen Chemie", Band 28 [Ca], Teil B, Lieferung 3, S. 1328, Aufl. 1961, hervorgeht, läßt sich das Doppelsalz Ammoniumsyngenit, $(NH_4)_2SO_4 \bullet CaSO_4 \bullet H_2O$, aus den konzentrierten wäßrigen Lösungen der Komponenten Ammoniumsulfat und Calciumsulfat durch teilweises Eindunsten (Comptes rendues 84 (1877) 86/88) oder Eindampfen (Ber. 9 (1876) 1358-63) herstellen.

Für eine technische Produktion von Ammoniumsyngenit kommt ein derartiges Verfahren jedoch nicht in Frage, da wegen der geringen Löslichkeit von Calciumsulfat in Wasser von nur ca. 2 g/l die benötigten Wassermengen unwirtschaftliche Ausmaße annehmen.

Nach J. D'Ans, Ber. 39 (1906) 3326/8, wird Ammoniumsyngenit durch mehrtägiges Stehen einer fast gesättigten, mit Gips versetzten Ammoniumsulfat-Lösung bei gewöhnlicher Temperatur, Absaugen und Waschen der abgetrennten Verbindung mit 50 %igem Alkohol, darauf mit absolutem Alkohol und schließlich mit Ether erhalten, wobei die Verbindung nur langsam angegriffen wird.

Dieser Prozeß ist wegen des mehrtägigen Stehens der Gips-Wasser-Suspension, wegen des Filtrationsschrittes und wegen des aufwendigen Waschverfahrens des Filterkuchens mit leicht brennbaren Flüssigkeiten in produktionstechnischer Hinsicht nicht durchführbar.

Nach M. Bare, Ann. Chim. Phys. [8] 24 (1911) 145/256 und 163, erfolgt zwar bei Zugabe von Calciumsulfat zu einer mäßig konzentrierten Ammoniumsulfat-Lösung fast augenblicklich eine Umsetzung, doch auch hier besteht das Problem der wirtschaftlichen Handhabung der Flüssigkeitsmengen sowie das der Abtrennung von Ammoniumsyngenit von der Flüssigkeit.

Das 8tägige Eindampfen eines Gemisches von einer überstöchiometrischen Menge an Ammoniumsulfat (251 g), Gips (36,65 g) und Wasser (1500 ml) bei 30 °C auf 1/3 des ursprünglichen Wasservolumens (500 ml) und Abfiltration der gebildeten Ammoniumsyngenitkristalle von der Mutterlauge nach A.R. Merz u.a., J. Am. Chem. Soc. 55 (1933) 3571/3, stellt aus den oben ausgeführten Gründen ebenfalls keine Lösung zur technisch-wirtschaftlichen Herstellung von Ammoniumsyngenit dar.

Auch in der Veröffentlichung in Bull. Chem. Soc. Japan 34 (1961) 678-683 wird beschrieben, daß Ammoniumsyngenit aus Ammoniumsulfat und Anhydrit, $CaSO_4$, erst dann gebildet wird, wenn die Ausgangsverbindungen mehrfach mit einem Überschuß an Wasser vermischt auf dem Wasserbad bei 45° erhitzt und nach jeder Prozedur jeweils getrocknet werden. Hierbei fällt ebenfalls verfahrensbedingt kein kornförmiges Produkt an. Die in der Veröffentlichung ferner mitgeteilten Untersuchungsergebnisse über die Bildung von Kaliumsyngenit-Ammoniumsyngenit-Mischkristallen aus den Ausgangskomponenten Superphosphat, Kaliumchlorid und Ammoniumsulfat in Anteilen von maximal etwa 50% bei der Rollgranulierung von NPK-Düngern belegen, daß kein reiner Ammoniumsyngenit, sondern nur die Kalium-Ammoniumsyngenit-Mischkristallphase entsteht. Als Grund hierfür ist die erheblich höhere thermische und damit auch thermodynamische Stabilität von Kaliumsyngenit und Kalium-Ammoniumsyngenit-Mischkristallen im Vergleich zu reinem Ammoniumsyngenit anzusehen.

Schließlich ist aus der DE-A-26 03 917 zu entnehmen, daß bei der Herstellung von rollgranuliertem Ammoniumsulfat- und/oder Kaliumsulfat durch Zugabe von Calciumverbindungen, wie Calciumchlorid, Calciumnitrat oder Calciumsulfat, in relativ kleinen Mengen von 0,4 bis 9 Gew.% CaO, unter genau definierten Reaktionsbedingungen syngenitartige Doppelsalze, wie $(NH_4)_2SO_4 \bullet CaSO_4 \bullet H_2O$, $(NH_4)_2SO_4 \bullet 2$ $CaSO_4$ und $(NH_4)_2SO_4 \bullet 5$ $CaSO_4 \bullet 1$ $H_2O$ oder die analogen binären Kalisalze gebildet werden. Dieser Anteil an syngenitartigen Doppelsalzen im Ammonium/Kaliumsulfat-Korn soll eine Kornverfestigung bewirken.

Als Reaktionsbedingungen werden angegeben: der Zusatz von mindestens 8 % Wasser, vorzugsweise 10 bis 15 Gew.% Wasser, bezogen auf die zu granulierenden Sulfate sowie eine thermische Zweistufenbehandlung von 60 bis 80° C und 100 bis 105° C zur Trocknung. Aufgrund dieser Angaben ergibt sich, daß selbst bei einem mehrfachen stöchiometrischen Überschuß an Ammoniumsulfat sich aus Calciumsulfat und Ammoniumsulfat kein reiner Ammoniumsyngenit, $(NH_4)_2SO_4 \bullet CaSO_4 \bullet H_2O$, bildet, sondern daß nur Gemische aus syngenitartigen calciumreicheren Doppelsalzen erhalten werden.

Allen aufgeführten Verfahren haftet zudem der gemeinsame Nachteil an, daß die erzeugte Ammonsyngenit-Verbindung in Form von feinen diskreten Kristallen anfällt. Bei der technischen Handhabung eines derartigen Produktes, z.B. beim Absacken, Umfüllen, Eindosieren oder Transportieren, kommt es wegen der Feinteiligkeit stets zu einer Staubentwicklung, was aus verschiedenen Gründen unerwünscht ist. Für bestimmte Anwendungsgebiete, z.B. für die gleichmäßige und weitflächige Ausbringung auf land- oder forstwirtschaftlich genutzten Flächen mittels Auswurfmaschinen, z.B. Schleuderstreuern, ist eine derartige feinteilige Stoffbeschaffenheit sogar prohibitiv.

Aufgabe der vorliegenden Erfindung war es daher, Ammonsyngenit in gekörnter Form auf technisch einfachem Wege herzustellen. Die Aufwendungen für irgendwelche Löseschritte der Ausgangskomponenten, für eine kostspielige Trennung von auskristallisiertem Ammonsyngenit und Mutterlauge, für eine Trocknung des feuchten Filterkuchens, für eine Aufarbeitung der Mutterlaugen sowie für eine sich anschließende Granulation sollten so gering wie möglich sein oder gar ganz vermieden werden.

Es wurde gefunden, daß diese Aufgabe dadurch gelöst werden kann, daß man Mischungen von Ammoniumsulfat und Calciumsulfat, deren Teilchengrößen unter 0,5 mm liegen, in Gegenwart von 0,9 bis 3,5 Mol Wasser pro Mol Ammoniumsulfat, wobei maximal 1,5 Mol als freies Wasser vorliegen, zu kompakten körnigen Produkten verpreßt.

Erfindungsgemäß erfolgt die Verpressung der Mischungen in Gegenwart von 1 bis 3,5 Molen Wasser, wobei maximal 1,5 Mole als freies Wasser vorliegen sollen, während ein eventuell überschießender Rest als Kristallwasser an einem der Reaktionspartner, d.h. an die Calciumsulfatverbindungen oder nachstehend noch beschriebenen wasserhaltigen Substanzen als Kristallwasser gebunden vorliegt. Es ist auch möglich, ohne freies Wasser auszukommen und das für die Ammoniumsyngenitbildung benötigte Wasser ganz über das mit den Reaktionskomponenten eingebracht Kristallwasser in die Mischung einzuführen.

Für die Verpressung, für die auch synonym der Begriff Brikettierung gebraucht wird, lassen sich alle aus der Formgebung von Pulvern her bekannten Maschinen verwenden. Beispiele sind Tablettenpressen, Walzenpressen mit und ohne Profil, Ringwalzenpressen sowie Strangpressen. Für das vorliegende Produkt haben sich Doppelwalzenpressen, die auch unter dem Namen Kompaktoren bekannt sind, gut bewährt.

Verwendet man Kompaktoren, so erhält man ein schülpenförmiges Preßmaterial. Dieses wird zweckmäßigerweise gebrochen und gesiebt, um ein Produkt mit relativ gleichartigem Längen- und Breitenverhältnis zu erhalten. Bei einer Verwendung von Ammoniumsyngenit als Düngemittel haben sich für übliche Anwendungszwecke Korngrößen im Bereich von etwa 1 bis 4 mm als besonders geeignet herausgestellt.

Neben dem Brechen und Sieben lassen sich noch weitere Veredelungsstufen anschließen, wie z.B. eine Behandlung mit Staubbindeölen oder ein nachträgliches Hydrophobieren des Granulates mit wasserabstoßenden Mitteln, z.B. synthetischen oder natürlichen Ölen, Fetten, Teeren, Wachsen und Paraffinen.

Die röntgenographische Analyse in der Schülpe oder im Korn beweist, daß die Ausgangskomponenten sich zu Ammoniumsyngenit umgewandelt haben. Das gekörnte Produkt aus Ammoniumsyngenit stellt, wie im weiteren noch ausgeführt, einen Dünger dar, der speziell als langsamwirkender Stickstoffdünger eingesetzt werden kann.

Für den Fachmann war es überraschend und nicht vorhersehbar, daß ein festes, zusammenhaftendes, Ammoniumsyngenit enthaltendes Korn aus den Komponenten Ammonsulfat und Calciumsulfat durch Zugabe von nur sehr wenig Wasser oder von leicht wasserabgebenden Substanzen, wie z.B. Gips, durch Vermischen und einfaches Verpressen herstellbar ist. Alle bisher bekannten Verfahren zur Ammonsyngenitherstellung gehen, wie schon eingangs beschrieben, von konzentrierten Lösungen von Ammoniumsulfat und von Gips, $CaSO_4 \bullet 2 H_2O$, aus, wobei nur feinteilige Kriställchen aus dem gewünschten Produkt entstehen.

Die Einsatzstoffe Ammoniumsulfat und Calciumsulfat werden im Molverhältnis 1:1 ± 20 % eingesetzt, wobei es zweckmäßiger ist, die Ammoniumsulfatkomponente im Überschuß einzusetzen.

Als Einsatzstoff für Ammoniumsulfat gibt es keinerlei Beschränkungen, sofern es nur genügend feinteilig, d.h. eine Teilchengröße unter 0,5 mm hat. Besitzt das Ammoniumsulfat ein gröberes Korn, wie es z.B. gewöhnlich bei dem durch Kristallisation gewonnenen Ammoniumsulfat aus dem Caprolactam-Prozeß der Fall ist, so wird dieses vermahlen. Als besonders geeignet hat sich pulverförmiges sprühgetrocknetes Ammoniumsulfat erwiesen, wie es beispielsweise bei der Rauchgasentschwefelung anfällt.

Als Einsatzstoff für die Calciumsulfatkomponente im Ammoniumsyngenit können alle bekannten Calciumsulfatverbindungen herangezogen werden, das sind natürliches oder synthetisch hergestelltes wasserfreies Calciumsulfat, Anhydrit also, ferner die kristallwasserhaltigen Calciumsulfate α- und β-Halbhydrat, $CaSO_4 \bullet 0,5 H_2O$, sowie Gips $CaSO_4 \bullet 2 H_2O$. Selbstverständlich kann man auch Mischungen der verschiedenen Calciumsulfatverbindungen einsetzen. Vom Preis, Korngröße und Reaktivität stellt der jährlich in Millionen von Tonnen anfallende Abfallgips aus der Phosphorsäureproduktion oder aus der Rauchgasentschwefelung von Kraftwerken, Raffinerien und dgl. ein vorzüglich geeignetes Ausgangsmaterial dar. Desgleichen kann Abfallgips aus der Produktion von synthetischen organischen Carbonsäuren, wie Citronensäure oder Gluconsäure, verwendet werden.

Grobstückige Calciumsulfat-Verbindungen müssen ähnlich wie das Ammoniumsulfat auf Korngrößen unterhalb von 0,5 mm vermahlen werden. Liegen wenig reaktive Calciumsulfate, wie es z.B. bei den Anhydritsorten der Fall sein kann, vor, so können zusätzlich die bekannten Mittel zur Beschleunigung der Hydratisierung zugefügt werden, wie Kaliumsulfat, Zinksulfat oder Säuren, spez. Schwefelsäure oder deren saure Salze.

Die Zugabe der für eine Ammoniumsyngenitbildung erforderlichen Menge an Wasser kann entweder zu einer Mischung aus Ammoniumsulfat und der Calciumsulfatverbindung oder auch zu einem der einzelnen Ausgangsstoffe erfolgen. Ein hartes Korn erhält man, wenn man einen Teil oder auch die gesamte erforderliche Wassermenge in Form von Dampf der zu verpressenden Mischung unmittelbar vor dem Preßvorgang zugibt, so daß porenbildende Einschlußluft durch Wasserdampf verdrängt werden kann.

Wird Anhydrit oder auch Calciumsulfat-Halbhydrat als Calciumsulfatkomponente eingesetzt, so ist es besonders vorteilhaft, zumindest einen Teil des für die Bildung von Ammoniumsyngenit benötigten Wassers in Form von Gips einzusetzen, da Gips als Dihydrat im Stande ist, wie die Versuche ergeben haben, Kristallwasser abzuspalten. Bei Einsatz derartiger Gemische aus kristallwasserfreien bzw. -armen Calciumsulfaten und hochkristallwasserhaltigen Calciumsulfaten werden zur Beschleunigung der Umsetzungsreaktion zu Ammoniumsyngenit Lagertemperaturen der mit Ammoniumsulfat verpreßten Mischung oberhalb von Raumtemperatur (25° C) bevorzugt. Besonders zweckmäßig hat sich ein Temperaturbereich von etwa 40° C bis etwa 100° C erwiesen.

Statt Gips können auch andere wasserliefernde Substanzen, wie Salze mit einem hohen Kristallwassergehalt, die gleichzeitig auch eine düngewirksame Komponente enthalten, z.B. $MgSO_4 \bullet ca.$ 4 bis 7 $H_2O$, $MgHPO_4 \bullet 7$ $H_2O$, oder $Ca(NO_3)_2 \bullet 4$ $H_2O$ usw., verwendet werden. Voraussetzung bei den wasserliefernden Substanzen ist nur, daß das in ihnen chemisch gebundene Wasser leicht abgegeben werden kann. Als Charakterisierung hierfür kann der Wasserdampfdruck herangezogen werden, der bei allen wasserliefernden Substanzen bei etwa 150° C nicht weniger als 1 bar betragen sollte.

Im Falle von $Ca(NO_3)_2 \bullet 4$ $H_2O$ ist zu bemerken, daß das Ammoniumsulfat mit diesem zu Calciumsulfat umgesetzt wird, das einerseits mit noch vorhandenem Ammoniumsulfat zu Ammoniumsyngenit reagiert. Bei der Bemessung der Ammoniumsulfatmenge ist dies gegebenenfalls zu berücksichtigen.

Bei der erfindungsgemäßen Herstellung der ammoniumsyngenithaltigen Produkte können außer den soeben erwähnten Zusätzen selbstverständlich noch andere Stoffe zugesetzt werden, sei es, daß diese als Ballast, wie z.B. Sand, oder als Mittel zum Erzeugen einer bestimmten zusätzlichen Wirkung dienen.

Für eine Beeinflussung des Preßverhaltens können alle in Fachkreisen bekannten Verbindungen, z.B. Graphite, Talkum, Bentonite, Ligninsulfonate, Salze von Fettsäuren, wie Ca- oder Magnesiumstearat oder -palmitat, usw., eingesetzt werden. Zur Veränderung des Wasseraufnahmevermögens des gekörnten Ammoniumsyngenit lassen sich einerseits Hydrophobierungsmittel- z.B. Öle, Salze von Fettsäuren, Silikone oder perfluororganische Verbindungen, und andererseits Netzmittel - kationische, anionische und nichtionische Tenside - sowie Quellmittel organischer oder anorganischer Herkunft verwenden. Bei Einsatz von Ammoniumsyngenit als Düngemittel ist es naheliegend, außer den im Ammoniumsyngenit vorhandenen Pflanzennährstoffen N, CaO und S noch weitere Nährstoffe, wie $P_2O_5$, $K_2O$, MgO, B, Fe, Mn, Zn, Cu und sonstige Spurennährstoffe, zuzusetzen. Mit eingeschlossen ist der Zusatz von den Ammoniumabbau im Erdboden regulierenden Substanzen, wie z.B. Dicyandiamid und dessen Derivate oder Nitrapyrin, 2-Chlor-6-trichlormethylpyridin, oder ähnlich wirkende Nitrifikationsinhibitoren. Desgleichen können zur Erhöhung des N-Gehaltes von Ammoniumsyngenit N-reichere Verbindungen, wie Ammoniumnitrat, Ammoniumchlorid, Harnstoff, Oxamid, Harnstoff-Aldehyd-Kondensate, Calciumcyanamid, Dicyandiamid und ähnliches mehr, untergemischt werden.

Je nach der Korngröße der Ausgangskomponenten reagieren diese mehr oder minder schnell zu Ammoniumsyngenit. Die Reaktionszeit ist außer von der zugegebenen Wassermenge ebenfalls noch von dem eingesetzten Calciumsulfat abhängig, wobei das Halbhydrat schneller reagiert als Naturanhydrit oder Gips. Bei Anwendung von genügend feinteiligem Halbhydrat mit einer mittleren Korngrößen von 0,07 mm ist die Masse bereits nach 20 Minuten bei 25° C vollständig durchreagiert, während z.B. beim Einsatz von Gips mit einer mittleren Korngröße von 0,07 mm die Zeit bis etwa 40 Stunden beträgt (bei 25° C). Diese Nachreaktion ist an sich nicht schädlich, da sie keine nachteiligen Folgen, z.B. Verbacken bei der Lagerung, nach sich zieht. Es ist jedoch möglich durch Lagerung des Produktes bei erhöhten Temperaturen von 40 bis 100° C die Reaktionszeit abzukürzen.

Der gemäß der vorhergehenden Beschreibung hergestellte gekörnte Ammoniumsyngenit ist besonders vorteilhaft als N-CaO-S-Dünger einzusetzen. Er zeichnet sich im Vergleich zu den üblichen N-Düngern Ammoniumnitrat und reinem Ammoniumsulfat durch eine bessere Verträglichkeit und eine langsamere N-Anlieferung an der Pflanzenwurzel aus. Infolgedessen sind Verbrennungen der Pflanzen durch eine ungleichmäßige Düngerausbringung viel weniger kritisch, was sich speziell bei den gegen Überdüngung empfindlicheren Jungpflanzen bemerkbar macht. Die langsamere Nährstoffanlieferung bewirkt, daß die Düngeperioden viel weiter auseinandergezogen werden können. Die Verwendung von gekörntem Ammoniumsyngenit als Düngemittel bringt somit erhebliche Arbeitseinsparung mit sich.

Beispiele 1 bis 15

Entsprechend dem in der Tab. 1 angegebenen Molverhältnis wurden die Reaktionskomponenten Ammoniumsulfat (AS) und Calciumsulfat in einer Schlagkreuzmühle miteinander vermischt, mit der in der Tab. 1 angeführten Wassermenge versehen und unmittelbar danach zu Tabletten vom Durchmesser 14 mm bei einem Preßdruck von 10 t ca. 1 min. lang verpreßt.

Die Tabletten wurden bei den in der Tab. 1 angegebenen Temperaturen in abgeschlossenen Gefäßen zur Ausschaltung des Einflusses der Luftfeuchtigkeit gelagert und nach den ebenfalls in Tab. 1 aufgelisteten Zeiten röntgenographisch auf Ammoniumsyngenit untersucht. Wie aus der Tabelle hervorgeht, konnte bei allen Beispielen spätestens nach 64 Stunden eine Umsetzung zu Ammoniumsyngenit verzeichnet werden.

Im Beispiel 3 wurde kein Wasser zugesetzt. Durch Lagerung bei erhöhter Temperatur konnte eine Freisetzung des im Gips enthaltenen Kristallwassers erreicht werden, so daß eine Umsetzung zu Ammoniumsyngenit zustande kam.

Bei den in der Tabelle 1 aufgeführten Einsatzstoffen handelt es sich beim Ammoniumsulfat I (AS I) um ein grobkörniges Ammoniumsulfat aus der Caprolactamproduktion, das auf eine Korngröße unterhalb von 0,1 mm vermahlen war. AS II stellt ein pulverförmiges sprühgetrocknetes Ammoniumsulfat aus der Rauchgasentschwefelung eines Kohlekraftwerkes mit einer Korngröße unterhalb von 0,1 mm dar. Gipssorten A, B und C sind $CaSO_4 \bullet 2\ H_2O$-Verbindungen folgender Provenienz: A - chemisch reiner Gips, mittlere Korngröße 30 $\mu$m; B - Abfallgips aus der Rauchgasentschwefelung eines Kohlekraftwerkes, luftgetrocknet, mittlere Korngröße 60 $\mu$m; C - Abfallgips aus der Phosphorsäureproduktion, luftgetrocknet, mittlere Korngröße 70 $\mu$m.

Die Bezeichnungen Anhydrit A und B beziehen sich auf einen feingemahlenen Naturanhydrit, $CaSO_4$, mit einer mittleren Korngröße von 30 $\mu$m und einer BET-Oberfläche von 1,6 $m^2$/g bzw. auf einen gemahlenen synthetischen Anhydrit mit einer mittleren Korngröße von ca. 70 $\mu$m und einer BET-Oberfläche von 10,7 $m^2$/g. Bei allen Versuchsbeispielen mit Anhydrit A wurden diesem zur Reaktionsbeschleunigung 3 % (m/m) Kaliumdisulfat, $K_2S_2O_7$, bezogen auf Anhydrit, zugefügt.

Tabelle 1: Herstellung von Ammonsyngenit-haltigen ⟶ Tabletten

| Beispiel Nr. | Molverhältnis Ammoniumsulfat:Calciumsulfat-Komponente (AS) | Wasserzusatz[1] % (m/m) | Wassergehalt[2] mol $H_2O$ gesamt/ mol AS | mol $H_2O$ frei / mol AS | Temp. °C | Zeit h | Reaktions-produkt (nach Röntgenanalyse) |
|---|---|---|---|---|---|---|---|
| 1 | 1,0 AS I : 1,0 Gips A | 5 | 2,84 | 0,84 | 25 | 40 | Ammoniumsyngenit |
| 2 | 1,2 AS I : 1,0 Gips A | 5 | 2,43 | 0,76 | 25 | 40 | Ammoniumsyngenit |
| 3 | 1,05 AS I : 1,0 Gips A | 0 | 1,90 | 0 | 50 | 64 | Ammoniumsyngenit |
| 4 | 1,2 AS II : 1,0 Gips B | 3 | 2,12 | 0,46 | 60 | 6 | Ammoniumsyngenit |
| 5 | 1,0 AS I : 1,0 Gips B | 0,5 | 2,08 | 0,08 | 25 | 64 | Ammoniumsyngenit |
| 6 | 1,0 AS I : 1,0 Gips C | 0,5 | 2,08 | 0,08 | 70 | 24 | Ammoniumsyngenit |
| 7 | 1,05 AS I : 1,0 α-HH | 3 | 0,93 | 0,45 | 25 | 3 | Ammoniumsyngenit |
| 8 | 1,80 AS II : 1,0 α-HH | 4 | 1,33 | 0,69 | 35 | 1 | Ammoniumsyngenit |
| 9 | 1,05 AS II : 1,0 β-HH | 5 | 1,23 | 0,75 | 25 | 0,3 | Ammoniumsyngenit |
| 10 | 1,1 AS I : 1,0 β-HH | 4 | 1,05 | 0,58 | 25 | 0,3 | Ammoniumsyngenit |
| 11 | 1,05 AS II : 1,0 Anhydrit A | 8 | 1,16 | 1,16 | 25 | 64 | Ammoniumsyngenit |
| 12 | 1,05 AS I : 1,0 Anhydrit B | 10 | 1,45 | 0,92 | 25 | 64 | Ammoniumsyngenit |
| 13 | 1,0 AS II : 0,4 α-HH:0,6 Gips B | 1 | 1,53 | 0,13 | 25 | 16 | Ammoniumsyngenit |
| 14 | 1,1 AS II : 0,5 α-HH:0,5 Gips C | 2 | 1,45 | 0,31 | 25 | 16 | Ammoniumsyngenit |
| 15 | 1,1 AS II : 0,4 Gips C:0,3 α-HH : 0,3 Anhydrit B | 5 | 1,61 | 0,75 | 25 | 16 | Ammoniumsyngenit |
| 16 | 1,05 AS II : 1,0 Gips C+20 % $NH_4Cl$ | 2 | 2,30 | 0,39 | 50 | 16 | Ammoniumsyngenit |
| 17 | 1,05 AS II : 1,0 Gips C+25 % UF | 2 | 2,30 | 0,40 | 40 | 16 | Ammoniumsyngenit |
| 18 | 1,1 AS I : 1,0 β-HH: 0,3 $Ca(NO_3)_2 \cdot 4\ H_2O$ | 0 | 1,55 | 0 | 60 | 16 | Ammoniumsyngenit |

[1] Wasserzusatz bezogen auf Gesamtgewicht der Mischung in Spalte 2

[2] Mol $H_2O$-gesamt umfaßt das mit der Calciumsulfat-Komponente und dem Wasser selbst eingebrachte Wasser

Die Abkürzungen α-HH und β-HH stehen für ein handelsübliches hydrothermal hergestelltes Calciumsulfat-Halbhydrat mit einer mittleren Teilchengröße von 60 μm bzw. für ein durch Calcination gewonnenes Calciumsulfat-Halbhydrat mit einer mittleren Teilchgröße von ca. 70 μm, das u.a. für die Herstellung von Putzgips eingesetzt wird.

Den Mischungen mit β-Halbhydrat in den Beispielen 9 und 10 wurden zur Verbesserung der Tablettenbildung Preßhilfsmittel zugegeben, und zwar im Beispiel 9 2 Gew.% Talkum und im Beispiel 10 4 Gew.%

Bentonit.

In den Beispielen 16 und 17 wurden zur Ammoniumsulfat-Gips-Mischung vorwiegend zur Anhebung des Stickstoffgehaltes 20 % (m/m) Ammoniumchlorid, $NH_4Cl$, sowie im zweiten Falle 25 % Ureaform (abgekürzt mit UF), ein langsamwirkender N-Dünger auf Basis von Harnstoff-Formaldehyd-Kondensaten, zugesetzt.

Beispiel 18 demonstriert wie Beispiel 3 die Wirkung wasserabgebender Substanzen. Statt mit Wasser wurde die Ammoniumsulfat-$CaSO_4 \bullet 0,5\ H_2O$-Mischung mit Calciumnitrat-tetrahydrat, $Ca(NO_3)_2 \bullet 4\ H_2O$, in einem molaren Verhältnis von 0,3 mol Tetrahydrat auf 1,0 mol $\beta$-Halbhydrat versetzt.

Beispiel 19 bis 21

Die Beispiele 19 bis 21 demonstrieren die Einsetzbarkeit eines Kompaktors zur Herstellung von Ammoniumsyngenit-haltigem Granulat aus Ammoniumsulfat und Calciumsulfatkomponenten. Die Mischungsverhältnisse, Wasserzusatzmengen, Lagertemperaturen und -zeiten zwischen Kompaktiervorgang und röntgenographischem Ammonsyngenitnachweis sind in der Tabelle 2 wiedergegeben.

Die Mischung der Ausgangskomponenten sowie die Zugabe von benötigtem Wasser durch Eindüsen erfolgte in einem Zwangsmischer mit innenliegenden rotierenden Pflugscharen. Die wasserhaltige Mischung wurde nach ca. 0,5 h Zwischenlagerzeit in einem Kompaktor bei einem Preßdruck von 2 t/cm Walzenbreite verpreßt. Die erhaltenen Schülpen wurden gebrochen und das Korn zwischen 2,0 und 3,5 mm ausgesiebt.

Tabelle 2: Herstellung von Ammonsyngenit-haltigem Granulat durch Kompaktieren

| Beispiel Nr. | Molverhältnis Ammoniumsulfat:Calciumsulfat | Wasserzusatz % (m/m) | Wassergehalt mol $H_2O$ gesamt/ mol AS | mol $H_2O$ frei/ mol AS | Temp. °C | Zeit h | Reaktions- produkt (nach Röntgenanalyse) |
|---|---|---|---|---|---|---|---|
| 19 | 1,05 AS II : 1,0 Gips A | 1 | 2,07 | 0,16 | 25 | 18 | Ammoniumsyngenit |
| 20 | 1,05 AS II : 1,0 Gips C | 1 | 2,07 | 0,16 | 25 | 40 | Ammoniumsyngenit |
| 21 | 1,10 AS I : 1,0 β-HH | 3 | 0,90 | 0,44 | 40 | 18 | Ammoniumsyngenit |
| 22 | 0,9 AS II : 1,0 β-HH:0,4 Ha | 3 | 1,09 | 0,53 | 25 | 20 | Ammoniumsyngenit |

Die Kompaktate wurden nach 2 h, 18 h und 40 h auf Ammoniumsyngenit untersucht. In den Beispielen 19 und 21 war schon nach 2 h eine weitgehende Umwandlung zu Ammoniumsyngenit zu verzeichnen, die nach 18 h praktisch abgeschlossen war. Im Beispiel 20 war nach 2 h noch größtenteils Gips vorhanden, der sich nach 18 h überwiegend und nach 40 h praktisch vollständig zu Ammoniumsyngenit umgewandelt hatte.

Im Beispiel 22 wurde eine Mischung aus pulverförmigem Ammoniumsulfat aus der Rauchgasentschwefelung (AS II), aus β-Calciumsulfat-Halbhydrat (β-HH) und gemahlenem Harnstoff (Ha) im Molverhältnis 0,9 AS II:1,0 β-HH:0,4 Ha nach Untermischen von 3 % (m/m) Wasser, bezogen auf die Gesamtmischung, 15 h lang zwischengelagert und darauf erst kompaktiert. Nach weiteren 5 h, insgesamt also 20 h nach dem Vermischungsvorgang, wurde im Granulat röntgenographisch eine praktisch vollständige Umwandlung zu Ammoniumsyngenit aufgefunden.

Anwendungsbeispiel

Beispiel 23

Zur Austestung der Düngerwirkung von Ammoniumsyngenit wurden Versuche zu Weidelgras in Mitscherlichgefäßen mit jeweils 6,5 kg Bodeninhalt angelegt. Zur Verwendung kam ein lehmiger Sandboden, der auf 60 % der maximalen Wasserkapazität eingestellt war. Eine Grunddüngung mit sekundärem Natriumphosphat und Kaliumchlorid gewährleistete optimale P- und K-Versorgung. Die Stickstoffgabe in Form von Ammoniumsyngenit bzw. Ammoniumsulfat betrug jeweils 2,5 g N pro Gefäß, wodurch eine Aussage über die Verträglichkeit des Düngers erhalten werden konnte. Die Applikation erfolgte nach Auflauf auf die Bodenoberfläche. Die Ertragsentwicklung wurde über drei Gras-Schnitte verfolgt. Zum Vergleich dienten unter völlig analogen Bedingungen angelegte Gefäßversuche, bei denen eine N-Düngung entweder fehlte oder mit Ammoniumsulfat erfolgte.

Die Versuchsergebnisse sind in Form eines Balkendiagrammes wiedergegeben. Im Diagramm bedeutet Balken 1 einen Vergleichsversuch ohne N-Gaben und Balken 2 einen Vergleichsversuch mit Ammoniumsulfat. Balken 3 zeigt die Ergebnisse mit einem kompaktierten Ammoniumsyngenit aus Reingips. Balken 4 und 5 veranschaulichen die Ertragsentwicklung bei Einsatz eines aus Phosphorsäuregips hergestellten kompaktierten Ammoniumsyngenits, wobei im Falle 4 ein gekörntes Produkt und im Falle 5 das gekörnte Produkt in nachträglich zu Pulver vermahlener Form mit einer Feinheit unter 0,2 mm zur Anwendung kam. Die verschiedenen schraffierten Flächen kennzeichnen von unten nach oben den 1., 2. und 3. Schnitt. Man erkennt am Ertrag, gemessen in Gramm Trockensubstanz pro Gefäß (g TS/Gef), daß Ammoniumsyngenit einem reinen Ammoniumsulfat, AS, eindeutig in der Düngerwirkung, speziell bei hohen Düngergaben, überlegen ist.

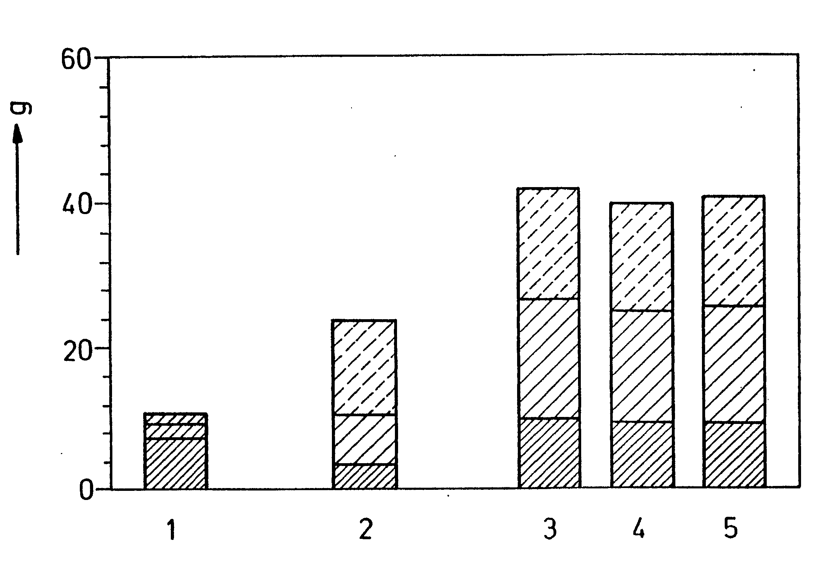

**Patentansprüche**

1. Verfahren zur Herstellung von ammoniumsyngenithaltigen Produkten durch Umsetzung von Ammoniumsulfat mit Calciumsulfat in Gegenwart von überschüssigem Wasser, dadurch gekennzeichnet, daß man Mischungen von Ammoniumsulfat und Calciumsulfat, deren Teilchengrößen unter 0,5 mm liegen, in Gegenwart von 0,9 bis 3,5 Mol Wasser pro Mol Ammoniumsulfat, wobei maximal 1,5 Mol als freies Wasser vorliegen, zu kompakten körnigen Produkten verpreßt.

2. Verfahren nach Anspruch 1, dadurch gekennzeichnet, daß man als Calciumsulfat dessen Halbhydrat einsetzt.

3. Verfahren nach Ansprüchen 1 und 2, dadurch gekennzeichnet, daß man die Kompaktate nach der Verpressung bei Temperaturen von 40 bis 100 °C lagert.

**Claims**

1. A process for the preparation of a product containing ammonium syngenite by reacting ammonium sulfate with calcium sulfate in the presence of excess water, wherein a mixture of ammonium sulfate and calcium sulfate whose particle sizes are less than 0.5 mm is compressed to a compact granular product in the presence of from 0.9 to 3.5 mol of water per mol of ammonium sulfate, not more than 1.5 mol being present as free water.

2. A process as claimed in claim 1, wherein the calcium sulfate is used in the form of its hemihydrate.

3. A process as claimed in claim 1 and 2, wherein, after compression, the compact product is stored at from 40 to 100 °C.

**Revendications**

1. Procédé de préparation de produits contenant de la syngénite d'ammonium par réaction de sulfate d'ammonium avec du sulfate de calcium en présence d'eau en excès, caractérisé en ce qu'on comprime en produits granuleux compacts des mélanges de sulfate d'ammonium et de sulfate de calcium, dont les grosseurs de particules se situent au-dessous de 0,5 mm, en présence de 0,9 à 3,5 moles d'eau par mole de sulfate d'ammonium, 1,5 mole au maximum étant présente sous forme d'eau libre.

2. Procédé selon la revendication 1, caractérisé en ce qu'on utilise, en tant que sulfate de calcium, du semi-hydrate de celui-ci.

3. Procédé selon la revendication 1 ou 2, caractérisé en ce qu'après la compression, on abandonne les produits compactés à des températures de 40 à 100˚C.

60

40

20

0

g

1  2  3  4  5